# EUROPEAN PATENT APPLICATION

(11) **EP 0 661 626 A2**
(43) Date of publication of application: **05.07.1995**
(21) Application number: 94120330.9
(22) Date of filing: 21.12.1994
(51) Int. Cl.: G06F 9/44

(54) **Method and system for launching application programs on an application server system**

(30) Priority: 23.12.1993 US 173377
(71) Applicant: SPACE LABS MEDICAL, INC., Redmond, Washington 98073 (US)
(72) Inventor: Smokoff, Timothy L., Renton, Washington 98059 (US)
(74) Representative: Grünecker, Kinkeldey, Stockmair & Schwanhäusser Anwaltssozietät

(57) **Abstract**

A method and system for method and system for launching application programs on an application server system is provided. In a preferred embodiment, the method and system, located within an application client computer system, launches a remote application program on a connected application server computer system in response to the selection of a non-textual application program identity indicator by a user. The method and system first displays several non-textual application program identity indicators, each of which conveys the identity of an application program available for execution on an application server computer system. The method and system then receive a signal indicating that the user has selected one of the displayed non-textual application program identity indicators. The method and system then launches the remote application program whose non-textual application program identity indicator was selected by the user by transmitting an instruction to execute that application program to an application server computer system upon which that application program is available for execution.

## Description

### Technical Field

The invention relates generally to a method and system for launching computer programs, and, more specifically, to a method and system for launching application programs on an application server system.

### Background of the Invention

An application program is a computer program designed to help people, called users, perform a certain type of work. Examples of application programs include calendar programs for scheduling appointments, calculator programs for performing calculations, and medical sensor monitoring programs for monitoring data collected by electronic medical sensors. A user of an application program usually uses the application program by interacting with input/output devices connected to a computer system. Such input/output devices include input devices such as a keyboard and a pointing device and display devices such as a video monitor connected to a single computer system. The computer system whose input/output devices the user interacts with is known as the user system.

Every application program is comprised of computer instructions, called code. In order to use an application program, the application program's code must be loaded into a memory in a computer system so that the instructions that comprise the code may be executed by a central processing unit (CPU) in the same computer system. The computer system on which the code is executed is known as the execution system.

In many cases, the user system is also the execution system. That is, the code tor the application is executed by the same computer system that the user interacts with. This approach is particularly common in standalone computer systems that are not connected to other computer systems.

On the other hand, some computer networks support an application server approach. Under the application server approach, one computer system connected to the network, called the application server, acts as the execution system, while a second computer system connected to the network, called the application client, acts as the user system. In order for a user to use an application program under the application server approach, the application client must transmit the user's input to the application server over the network. Likewise, the application server must transmit the application program's output to the application client over the network. The application server approach allows processing and memory resources to be concentrated in particular execution systems for use by a number of users from user systems.

In order for a user to use an application program under the application server approach, the user system from which the user wishes to use the application program (the application client) must send an instruction to an execution system where the application program is available (the application server) instructing the execution system to load and begin executing the program, accepting input from and directing output to the user system. Sending this instruction is known as remote launching.

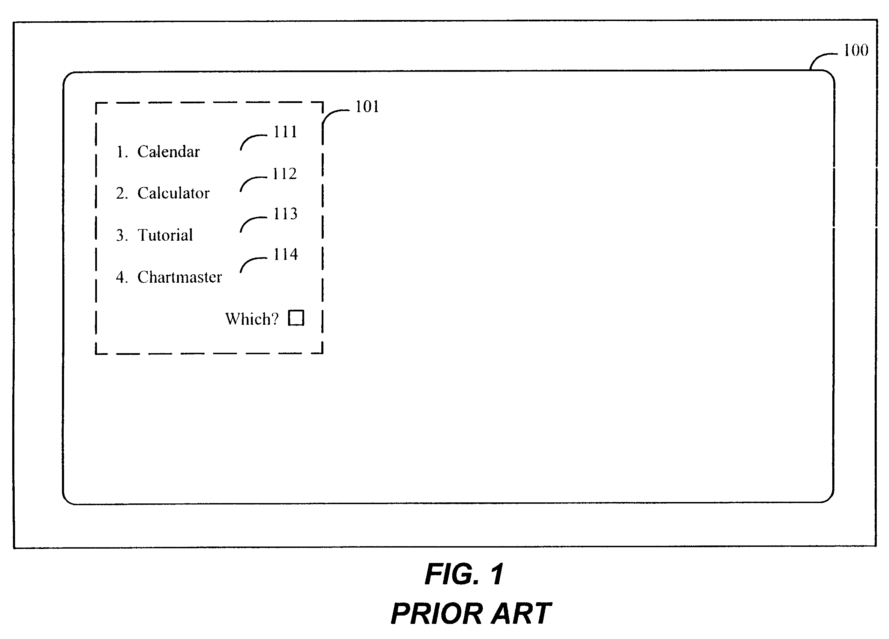

Different user interfaces to select application programs for remote launching have been used. Figure 1 is a screen image that shows a first conventional user interface. The application client displays a textual menu 101 on the screen of a display device 100. The textual menu lists available application programs 111-114, each preceded by a selection number. When the user types a selection number on the keyboard, the application client remote launches the corresponding available application. For example, to remote launch the "calculator" application program, the user would type '2'. The first conventional user interface has the disadvantage that it is inconsistent with the usability feel of modern graphical operating environments, in which entities such as application programs are visually represented by pictures, known as icons.

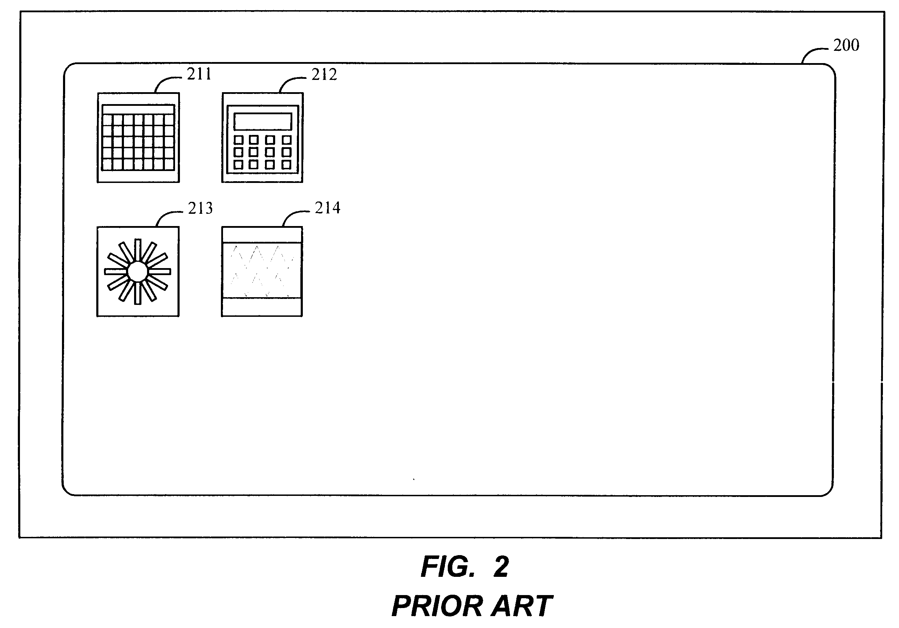

Figure 2 is a screen image that shows a second conventional user interface. The application client uses a batch job to remote launch every application program that the user might want to use. For each application that is remote launched, the application server retrieves and causes the application client to display an icon representing the application program. The screen 200 of the display device therefore contains icons 211-214. When the user uses a pointing device to activate one of the icons, the application server causes the application client to expand the activated icon to display the output of the associated application program.

While the second conventional user interface is consistent with the usability feel of modern graphical operating environments, it has the disadvantage that it is very expensive. First, the second conventional user interface causes the code of every application program that the user might want to use to be loaded into the memory of a server. Because the capacity of memories is scarce and expensive to increase, loading code into application server memories for application programs that may never be used is expensive. Second, the publishers of many application programs distribute them according to license agreements that specify a maximum number of copies of the application program that can simultaneously be loaded into the memories of execution systems in a single network. Because publishers generally demand royalty rates for such a licenses that are directly related to the maximum number of copies specified, it is expensive to arrange a license with a large enough maximum number of copies so that every user can have all of the application programs that the user might want to use loaded into memory all of the time. If the maximum number of copies specified is not large enough so that every user can have all of the application programs that the user might want to use loaded into memory all of the time, certain applications will regularly be unavailable to certain users. The result that certain applications will regularly be unavailable to certain users is also undesirable.

### Summary of the Invention

The invention provides a method and system for launching application programs on an application server system. In a preferred embodiment, the method and system, located within an application client computer system. launches a remote application program on a connected application server computer system in response to the selection of a non-textual application program identity indicator by a user. The method and system first displays several non-textual application program identity indicators, each of which conveys the identity of an application program available for execution on an application server computer system. The method and system then receive a signal indicating that the user has selected one of the displayed non-textual application program identity indicators. The method and system then launches the remote application program whose non-textual application program identity indicator was selected by the user by transmitting an instruction to execute that application program to an application server computer system upon which that application program is available for execution.

### Brief Description of the Drawings

Figure 1 is a screen image that shows a first conventional user interface.

Figure 2 is a screen image that shows a second conventional user interface.

Figure 3 is a high-level block diagram of the application client computer system upon which the facility preferably operates.

Figure 4 is a screen image showing icons corresponding to available applications displayed by the facility.

Figure 5 is a flow diagram showing the steps performed by the facility in order to display icons corresponding to available applications.

Figure 6 is a screen image showing an application launched by the facility.

Figure 7 is a screen image showing the icons for multiple instances of the facility.

### Detailed Description of the Invention

A method and system for launching remote application programs is provided. In a preferred embodiment, a software facility (the facility) running on an application client system (application client) displays a visual icon (icon) for every application program (application) available on one or more application server computer systems (application servers). When a user uses a pointing device, such as a mouse, connected to the application client to activate one of the icons, the facility causes the application corresponding to the activated icon to be launched on the appropriate application server.

The facility operates by maintaining a list of available applications. For each available application, the list contains a reference to a file containing the bitmap data required to display the icon for the application, the identity of the application server upon which the application is available, and the instruction that must be transmitted to the application server to launch the application. When the facility is started, it reads the list, uses the references to files containing bitmap data to retrieve the bitmap data, and uses the bitmap data to display the icons. When the user activates an icon, the facility retrieves the identity of the application server upon which the application is available and the instruction that must be transmitted to the application server to launch the application, and uses them to transmit an instruction to launch the application to the appropriate application server. When the application server receives the message, it loads and begins executing the application, using the application client to receive input from and provide output to the user. The facility preferably operates within a graphical operating environment that supports an application server approach, such as the public domain X-Windows distributed operating environment.

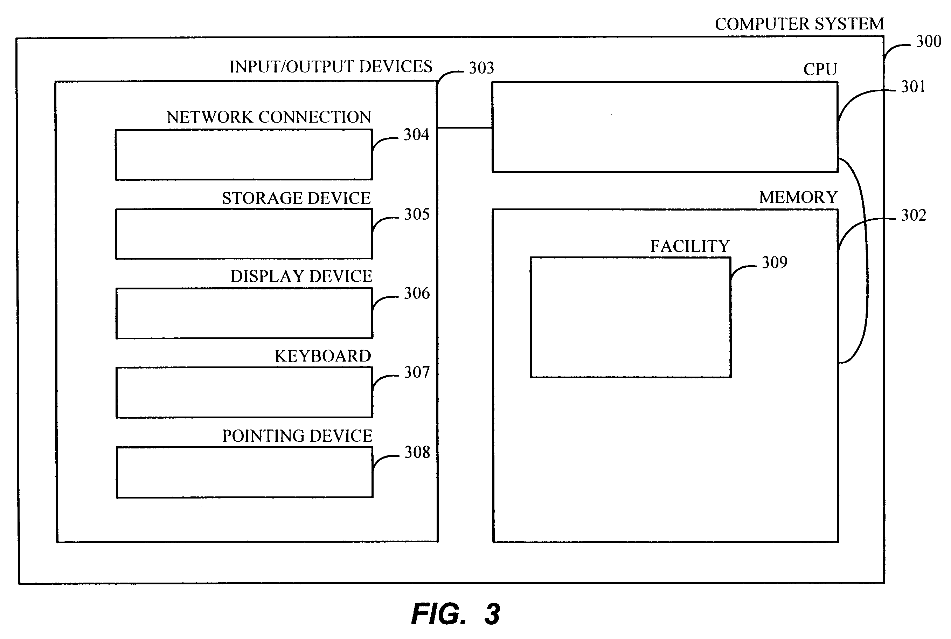

Figure 3 is a high-level block diagram of the application client computer system upon which the facility preferably operates. The application client computer system 300 contains a central processing unit (CPU) 301, a computer memory (memory) 302, and input/output devices 303, which are interconnected. Among the input/output devices are a network connection 304; a storage device 305, such as a hard disk drive; a display device 306, such as a touch-sensitive video monitor; a keyboard 307; and a pointing device 308, such as a mouse. The computer programs that constitute the facility 309 reside in the memory and execute on the CPU.

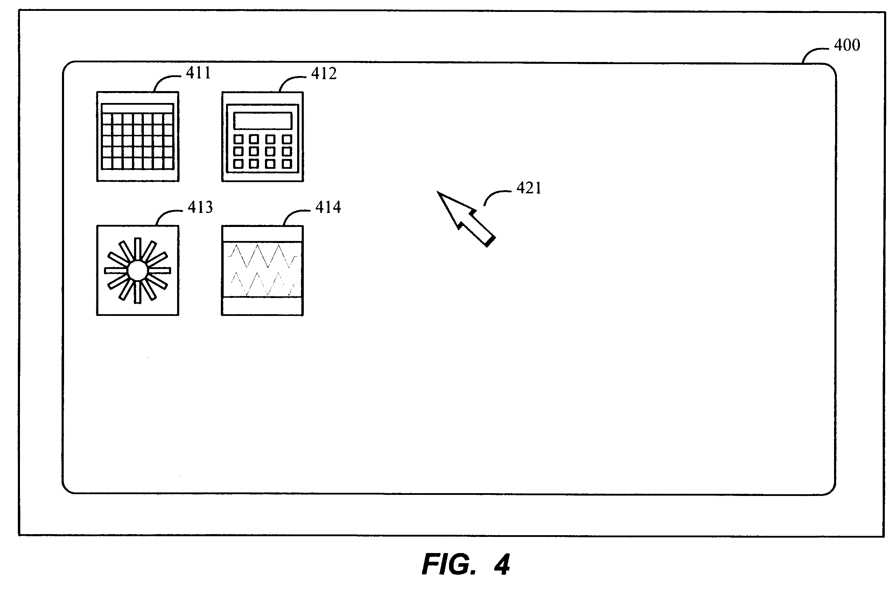

Figure 4 is a screen image showing icons corresponding to available applications displayed by the facility. The screen 400 of the display device contains icons 411-414, each corresponding to a particular application. For example, icon 412, corresponds to a calculator program. The screen also contains a mouse pointer 421 for activating icons that is moved by the graphical operating environment in response to movements of the pointing device by the user.

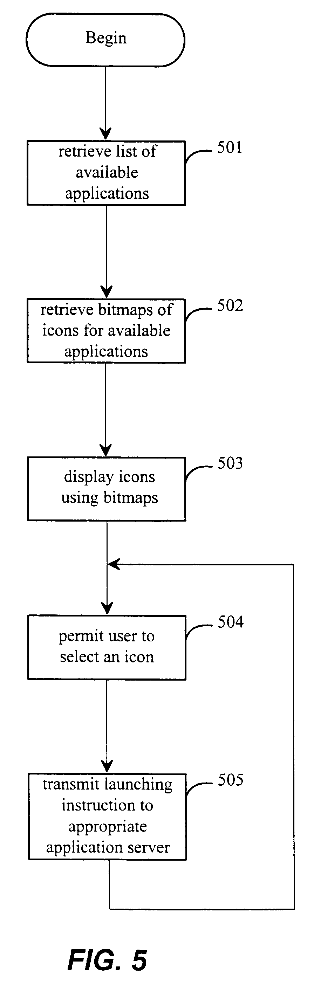

Figure 5 is a flow diagram showing the steps performed by the facility in order to display icons corresponding to available applications. In step 501, the facility retrieves a list of available applications. The list of available applications is preferably stored in a central location for the entire network. In a network in which several application clients are each using the facility, this permits a network administrator to make a new application available to every application client simultaneously by updating a single, centralized list.

**Table 1**

| icon name | icon bitmap location | application server | launching instruction |
|---|---|---|---|
| 1 calendar | /icons/calendar.ico | servera | cd/calendar; calendars -s mycal |
| 2 calculator | //servera/icons/calc.ico | servera | calc |
| 3 tutorial | //serterb/bitmaps/tutorial.xbm | serverb | cd applns/tutorial; tutorial |
| 4 chartmaster | //servab/bitmaps/chartmaster.xbm | serverb | setenv DISPLAY pcxg27:0; chart |

Table 1 shows the contents of a sample available application list (list) corresponding to the icons shown in Figure 4. Each line of the table corresponds to one available application, and contains an icon name, a reference to a file containing the bitmap data required to display the icon for the application, the identity of the application server upon which the application is available, and the instruction that must be transmitted to the application server to launch the application (launching instruction). For example, line 2 shows that the file containing the bitmap data required to display the icon for the calculator application is stored at "//servera/icons/calc.ico"_{,} the application is available on the "servera" application server, and the launching instruction to launch the calculator application is "calc".

Certain applications require that the user provide authentication information, comprising a user name and optionally a password, before they will execute. Where such applications are among the set of available applications, the list is preferably expanded to include authentication information for applications that require it. When the facility observes authentication information in the list for an application activated for launching, the facility preferably transmits the authentication information to the application server with the launch instruction. In a preferred embodiment, the password portion of the authentication information is encrypted while it is stored in the table. This necessitates encrypting this information any time it is stored in the table and decrypting this information any time the information is retrieved from the table by the facility.

Returning to Figure 5, in step 502, the facility uses the bitmap location fields from the list to retrieve the file containing bitmap data for the icon for each available application. In each case, retrieving the file may involve either accessing the application client's storage device or the storage device of another computer system connected to the network. For example, line 1 of Table 1 shows that the bitmap file for the icon for the calendar application is located on the application client's storage device at path name "/icons/calendar.ico", while line 2 shows that the bitmap file for the icon for the calculator application is located on the application server's storage device at path name "//servera/icons/calc.ico".

In step 503, the facility displays on the display device the icons for the available applications using the retrieved bitmaps. The details of step 503 will be apparent to those of ordinary skill in the art of programming in graphical operating environments.

In step 504, the facility permits the user to activate one of the displayed icons using the pointing device. Step 504 involves waiting to receive an activation signal generated by the pointing device, ascertaining the current horizontal and vertical positions of the mouse cursor, and determining whether the current horizontal and vertical positions of the mouse cursor place it inside one of the displayed icons. The user may also activate an icon by touching the touch-sensitive video monitor at the point at which the icon is displayed. Alternately, the user may use the keyboard to activate an icon by typing a unique key combination that is optionally displayed in conjunction with each icon. The user may also press a designated "cycling" key such as the Tab key, to cycle from one icon to the next until the user cycles to the icon that the user wishes to activate, then press an "activation" key such as the Enter key to activate the cycled-to icon.

In step 505, the facility transmits the launching instruction for the application corresponding to the activated icon to the application server upon which the application is available. Step 505 involves looking up the network address of the appropriate application server, then transmitting a remote procedure call (RPC) containing the launching instruction across the network to that address. In a preferred embodiment, the facility also includes information in the transmitted RPC about where on the application client's display device the application may display its output. After performing step 505, the facility preferably continues at step 504 to permit the user to launch another application by activating another icon. In an alternate embodiment (not shown), after performing step 505, the facility terminates to conserve available capacity of the application client's memory.

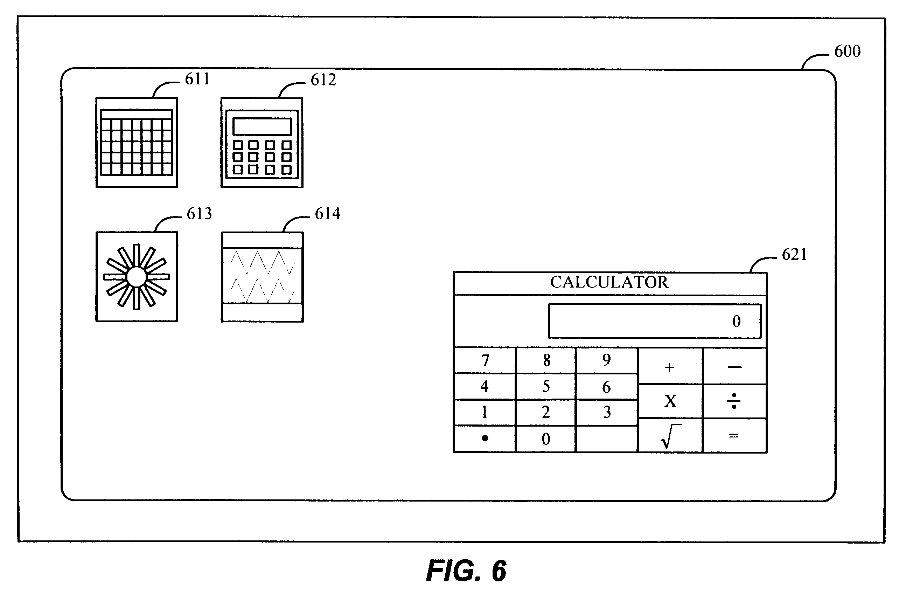

When the application server for the activated application receives the RPC instruction transmitted by the facility, it issues the launch instruction, causing the activated application to be launched on the application server. This is also known as triggering the execution of the application. Figure 6 is a screen Image showing an application launched by the facility. The screen 600 of the display device contains icons 611-614 and a calculator application window 621. The calculator application window contains visual output generated by the calculator application. When the user activates the calculator application window and points with the pointing device or types with the keyboard, the resulting input signals are transmitting by the application client to the application server on which the calculator application is executing.

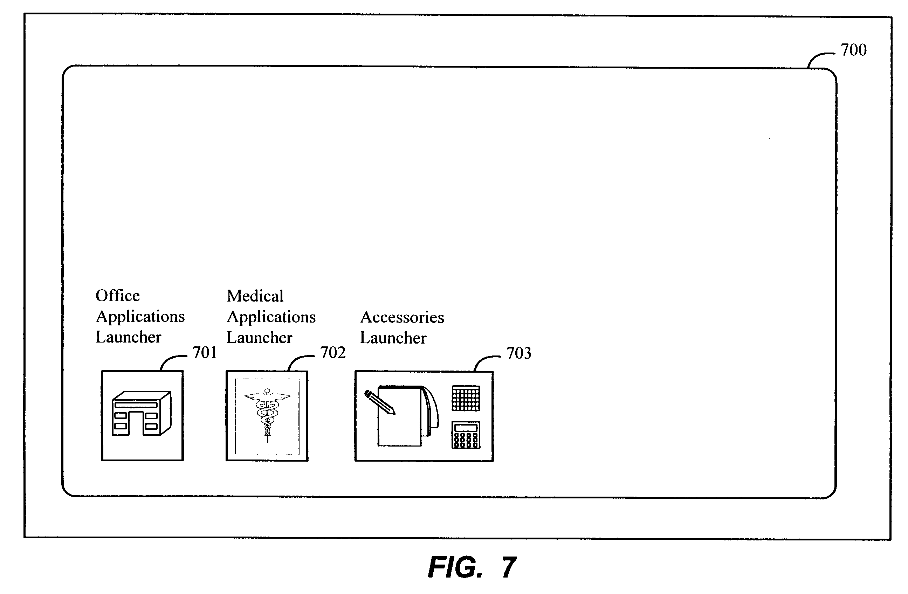

In a preferred embodiment of the present invention, the facility is adapted to arrange available applications in groups. When the facility is started, it creates an instance of itself for each of the groups. The graphical operating environment of the application server automatically displays a separate icon for each instance of the facility. Figure 7 is a screen image showing the icons for multiple instances of the facility. The screen 700 of the display device contains facility instance icons 711-713. Facility instance icon 711 corresponds to an office applications group, facility instance icon 712 to a medical applications group, and facility instance icon 713 to an accessories group. To activate an application for launching, the user first activates the instance of the facility created for the group containing the application the user wishes to activate. The activated instance of the facility then displays icons for the applications in the group of the activated instance of the facility, permits the user to activate one, and transmits a launching instruction as described above. This embodiment is useful where the number of available applications is large, as it allows a user to first choose from a reasonable number of groups, then choose from a reasonable number of applications contained in the chosen group.

While this invention has been shown and described with reference to preferred embodiments, it will be understood by those skilled in the art that various changes or modifications in form and detail may be made without departing from the scope of the invention.

## Claims

1. In an application client computer system, a method for launching an application program on one of a plurality of connected application server computer systems in response to selection of a non-textual application program identity indicator by a user, the method comprising the steps of:
displaying each of a plurality of non-textual application program identity indicators, each of the plurality of non-textual application program identity indicators conveying the identity of an application program available for execution on one of the plurality of application server computer systems;
receiving a signal indicating that the user has selected one of the displayed plurality of non-textual application program identity indicators; and
transmitting an instruction to execute the application program whose identity is conveyed by the selected non-textual application program identity indicator to the application server computer system upon which the application program whose identity is conveyed by the selected non-textual application program identity indicator is available for execution.

2. The method of claim 1 wherein the step of receiving a signal indicating that the user has selected one of the displayed plurality of non-textual application program identity indicators includes the step of receiving a signal originating in a pointing device indicating that the user has selected one of the displayed plurality of non-textual application program identity indicators.

3. The method of claim 1 wherein the step of receiving a signal indicating that the user has selected one of the displayed plurality of non-textual application program identity indicators includes the step of receiving a signal originating in a keyboard indicating that the user has selected one of the displayed plurality of non-textual application program identity indicators.

4. The method of claim 1 wherein the step of displaying each of a plurality of non-textual application program identity indicators, each of the plurality of non-textual application program identity indicators conveying the identity of an application program available for execution on one of the plurality of application server computer systems includes the step of displaying each of a plurality of visual icons, each of the plurality of visual icons conveying the identity of an application program available for execution on one of the plurality of application server computer systems.

5. The method of claim 1 wherein the transmitting step includes transmitting authentication information associated with the user to the application server computer system upon which the application program whose identity is conveyed by the selected non-textual application program identity indicator is available for execution.

6. The method of claim 1 wherein a plurality of application client computer systems and a plurality of application server computer systems are connected in a network, further including the step of retrieving a list of application programs available for execution on one of the plurality of application server computer systems

7. The method of claim 6, further including the step of adding an application program to the list of application programs available for execution on one of the plurality of application server computer systems, thereby allowing the user of any application client computer system to select the added application program for launching.

8. In an application client computer system, a method for launching an application program on a connected application server computer system in response to activation of a visual icon by a user, the method comprising the steps of:
retrieving data representing a plurality of visual icons, each of the plurality of visual icons visually conveying the identity of an application program available for execution on the application server computer system;
displaying each of the plurality of visual icons using the retrieved data representing the plurality of visual icons;
receiving a signal indicating that the user has activated one of the displayed visual icons; and
transmitting an instruction to execute the application program whose identity is conveyed by the activated visual icon to the application server computer system.

9. The method of claim 8 wherein the transmitting step includes the step of transmitting authentication information associated with the user to the application server computer system.

10. The method of claim 8 wherein the step of receiving a signal indicating that the user has activated one of the displayed visual icons includes the step of receiving a signal originating in a pointing device indicating that the user has activated one of the displayed visual icons.

11. The method of claim 8 wherein the step of receiving a signal indicating that the user has activated one of the displayed visual icons includes the step of receiving a signal originating in a keyboard indicating that the user has activated one of the displayed visual icons.

12. The method of claim 8 wherein the step of receiving a signal indicating that the user has activated one of the displayed visual icons includes the step of receiving a signal originating in a touch-sensitive video monitor indicating that the user has activated one of the displayed visual icons.

13. The method of claim 8, further including the step of permitting the user to select one of a plurality of application program groups, each of the application program groups containing one or more available application programs, and wherein the step of retrieving data representing a plurality of visual icons, each of the plurality of visual icons visually conveying the identity of an application program available for execution on the application server computer system includes the step of retrieving data representing a plurality of visual icons, each of the plurality of visual icons visually conveying the identity of an application program contained by the selected program group, and wherein the step of displaying each of the plurality of visual icons using the retrieved data representing the plurality of visual icons includes the step of displaying each of the plurality of the visual icons visually conveying the identity of an application program contained by the selected program group.

14. In a computer network comprised of a plurality of connected nodes, a method for triggering execution of a computer program in a first node from a second node in response to activation of a visual icon by a user, the method comprising the steps of:
retrieving data representing a plurality of visual icons, each of the plurality of visual icons visually conveying the identity of an application program available for execution on the second node;
under the control of the first node, displaying each of the plurality of visual icons using the retrieved data representing the plurality of visual icons;
receiving a signal indicating that the user has activated one of the displayed visual icons; and
under control of the second node, triggering the execution of the application program whose identity is conveyed by the activated visual icon.

15. The method of claim 14 wherein the step of receiving a signal indicating that the user has activated one of the displayed visual icons includes the step of receiving a signal originating in a pointing device indicating that the user has activated one of the displayed visual icons.

16. The method of claim 14 wherein the step of receiving a signal indicating that the user has activated one of the displayed visual icons includes the step of receiving a signal originating in a keyboard indicating that the user has activated one of the displayed visual icons.

17. The method of claim 14 wherein the step of receiving a signal indicating that the user has activated one of the displayed visual icons includes the step of receiving a signal originating in a touch-sensitive video monitor indicating that the user has activated one of the displayed visual icons.

18. An application client computer system for launching an application program on one of a plurality of connected application server computer systems in response to selection of a non-textual application program identity indicator by a user, comprising:
a display device for displaying each of a plurality of non-textual application program identity indicators, each of the plurality of non-textual application program identity indicators conveying the identity of an application program available for execution on one of the plurality of application server computer systems; and
a memory for storing a program for receiving a signal indicating that the user has selected one of the displayed plurality of non-textual application program identity indicators and transmitting an instruction to execute the application program whose identity is conveyed by the selected non-textual application program identity indicator to the application server computer system upon which the application program whose identity is conveyed by the selected non-textual application program identity indicator is available for execution.

19. The application client computer system of claim 18, further including an input device for selecting one of the displayed plurality of non-textual application program identity indicators.

20. The application client computer system of claim 19 in which the input device is a keyboard.

21. The application client computer system of claim 19 in which the input device is a pointing device.

22. The application client computer system of claim 19 in which the input device is a touch-sensitive video monitor.
